# EUROPEAN PATENT APPLICATION

(11) **EP 3 951 815 A1**
(43) Date of publication of application: **09.02.2022**
(21) Application number: 20776850.8
(22) Date of filing: 27.01.2020
(51) Int. Cl.: H01G 11/06, H01G 11/56, H01M 10/052, H01M 10/0562, H01M 10/0585, H01M 2/30

(54) **POWER STORAGE DEVICE**

(30) Priority: 25.03.2019 JP 2019056757
(71) Applicant: Panasonic Intellectual Property Management Co., Ltd., Osaka-shi, Osaka 540-6207 (JP)
(72) Inventor: KOGA, Eiichi, Osaka-shi (JP); HIGASHI, Yoshiko, Osaka-shi (JP)
(74) Representative: Grünecker Patent- und Rechtsanwälte PartG mbB
(86) International application number: PCT/JP2020/002756
(87) International publication number: WO 2020/195101

(57) **Abstract**

The present disclosure provides a surface-mount power storage device. A power storage device of the present disclosure includes a solid electrolyte layer (400); a coating layer (600) that coats a surface of the solid electrolyte layer (400); a first internal electrode (310) disposed inside the solid electrolyte layer (400); a first external electrode (510) disposed outside of the solid electrolyte layer (400) and electrically connected to the first internal electrode (310); a second internal electrode (320) disposed inside the solid electrolyte layer (400); and a second external electrode (520) disposed outside of the solid electrolyte layer (400) and electrically connected to the second internal electrode (320). The coating layer (600) has a conductivity less than a conductivity of the solid electrolyte layer (400).

## Description

### Technical Field

The present disclosure relates to a power storage device in which a solid electrolyte is used.

### Background Art

Patent Literature 1 discloses a battery in which a solid electrolyte structure made of a garnet-type crystal Li₇L₃Zr₂O₁₂ is included, and a surface of the structure is coated with a resin. Patent Literature 2 discloses a battery in which Li₇La₃Zr₂O₁₂ is used as a solid electrolyte, and an insulating layer is used between a positive electrode or a negative electrode and the solid electrolyte.

### Citation List

### Patent Literature

PTL 1: International Publication No. 2013/100001
PTL 2: Japanese Unexamined Patent Application Publication No. 2017-139199

### Summary of Invention

### Technical Problem

An object of the present disclosure is to provide a surface-mount power storage device.

### Solution to Problem

The present disclosure provides a power storage device. The power storage device includes
a solid electrolyte layer;
a coating layer that coats a surface of the solid electrolyte layer;
a first internal electrode disposed inside the solid electrolyte layer;
a first external electrode disposed outside of the solid electrolyte layer and electrically connected to the first internal electrode;
a second internal electrode disposed inside the solid electrolyte layer; and a second external electrode disposed outside of the solid electrolyte layer and electrically connected to the second internal electrode.

The coating layer has a conductivity less than a conductivity of the solid electrolyte layer, and
the coating layer has a thickness of greater than or equal to 1 µm and less than or equal to 100 µm.

### Advantageous Effects of Invention

With the present disclosure, surface-mount power storage devices are provided.

### Brief Description of Drawings

[Fig. 1] Fig. 1 is a schematic cross-sectional view illustrating a configuration of a power storage device according to a first embodiment of the present disclosure.
[Fig. 2] Fig. 2 is a schematic cross-sectional view illustrating a configuration of a power storage device according to a second embodiment of the present disclosure.
[Fig. 3] Fig. 3 is a schematic cross-sectional view illustrating a configuration of a power storage device according to a third embodiment of the present disclosure.
[Fig. 4] Fig. 4 is a schematic cross-sectional view illustrating a configuration of a power storage device according to a fourth embodiment of the present disclosure.
[Fig. 5] Fig. 5 is a schematic cross-sectional view illustrating a configuration of a power storage device according to a fifth embodiment of the present disclosure.
[Fig. 6] Fig. 6 is a schematic cross-sectional view illustrating a configuration of a power storage device according to a sixth embodiment of the present disclosure.
[Fig. 7] Fig. 7 is a schematic cross-sectional view illustrating a configuration of a power storage device according to a seventh embodiment of the present disclosure.

### Description of Embodiments

### (Overview of Aspects of the Present Disclosure)

According to a first aspect of the present disclosure, a power storage device includes:
a solid electrolyte layer;
a coating layer that coats a surface of the solid electrolyte layer;
a first internal electrode disposed inside the solid electrolyte layer;
a first external electrode disposed outside of the solid electrolyte layer and electrically connected to the first internal electrode;
a second internal electrode disposed inside the solid electrolyte layer; and
a second external electrode disposed outside of the solid electrolyte layer and electrically connected to the second internal electrode.

The coating layer has a conductivity less than a conductivity of the solid electrolyte layer, and
the coating layer has a thickness of greater than or equal to 1 µm and less than or equal to 100 µm.

With the first aspect, an insulating property of the surface of the solid electrolyte layer is ensured. Consequently, in instances where a plating process is performed on a terminal, deposition of the plating on portions other than the terminal is inhibited. Accordingly, the power storage device provided is suitable for solder mounting.

In a second aspect of the present disclosure, the power storage device of the first aspect may be such that, for example, the power storage device further includes an active material layer disposed inside the solid electrolyte layer. With this configuration, the power storage device provided is suitable for solder mounting.

In a third aspect of the present disclosure, the power storage device according to the first or second aspect may be such that, for example, the solid electrolyte layer is a sintered body. With this configuration, the power storage device provided is suitable for solder mounting.

In a fourth aspect of the present disclosure, the power storage device according to any one of the first to third aspects may be such that, for example, the solid electrolyte layer has a garnet structure. With this configuration, the power storage device provided is suitable for solder mounting.

In a fifth aspect of the present disclosure, the power storage device according to any one of the first to fourth aspects may be such that, for example, the solid electrolyte layer contains no sulfur. With this configuration, the power storage device provided is suitable for solder mounting.

In a sixth aspect of the present disclosure, the power storage device according to any one of the first to fifth aspects may be such that, for example, the solid electrolyte layer includes a crystalline phase including at least one selected from the group consisting of Li₇La₃Zr₂O₁₂ and Li₇Pr₃Zr₂O₁₂. With this configuration, the power storage device provided is suitable for solder mounting.

In a seventh aspect of the present disclosure, the power storage device according to any one of the first to sixth aspects may be such that, for example, the coating layer has a conductivity of less than or equal to 10⁻⁴ S/cm. With this configuration, the power storage device provided is suitable for solder mounting.

In an eighth aspect of the present disclosure, the power storage device according to any one of the first to seventh aspects may be such that, for example, the coating layer includes an oxide. With this configuration, the power storage device provided is suitable for solder mounting.

In a ninth aspect of the present disclosure, the power storage device according to the eighth aspect may be such that, for example, the oxide includes a pyrochlore oxide. With this configuration, the power storage device provided is suitable for solder mounting.

In a tenth aspect of the present disclosure, the power storage device according to the ninth aspect may be such that, for example, the pyrochlore oxide includes at least one selected from the group consisting of La₂Zr₂O₇ and Pr₂Zr₂O₇. With this configuration, the power storage device provided is suitable for solder mounting.

In an eleventh aspect of the present disclosure, the power storage device according to any one of the first to tenth aspects may be such that, for example, the coating layer includes a crystalline phase including Li₂ZrO₃. With this configuration, the power storage device provided is suitable for solder mounting.

In a twelfth aspect of the present disclosure, the power storage device according to any one of the first to eleventh aspects may be such that, for example, the coating layer has a Li content molar ratio less than a Li content molar ratio of the solid electrolyte layer. With this configuration, the power storage device provided is suitable for solder mounting.

In a thirteenth aspect of the present disclosure, the power storage device according to any one of the first to twelfth aspects may be such that, for example, the coating layer has a thickness of greater than or equal to 5 µm and less than or equal to 100 µm. With this configuration, the power storage device provided is suitable for solder mounting.

In a fourteenth aspect of the present disclosure, the power storage device according to any one of the first to thirteenth aspects may be such that, for example, the power storage device further includes a plating that coats a surface of the first external electrode and a surface of the second external electrode. With this configuration, the power storage device provided is suitable for solder mounting.

In a fifteenth aspect of the present disclosure, the power storage device according to any one of the first to fourteenth aspects may be such that, for example, the plating has a thickness of greater than or equal to 1 µm and less than or equal to 10 µm. With this configuration, the power storage device provided is suitable for solder mounting.

Now, embodiments will be described in detail with reference to the drawings.

Note that each of the embodiments described below is a generic or specific example. In the following descriptions of the embodiments, the mentioned numerical values, shapes, materials, constituent elements, arrangements of the constituent elements, forms of connections thereof, and the like are merely illustrative and are not intended to limit the present disclosure. Furthermore, among the constituent elements in the following embodiments, constituent elements not described in the independent claim, which represents the most generic concept, will be described as optional constituent elements.

Furthermore, the drawings are not necessarily drawn to scale. In the drawings, substantially identical components are assigned the same numerals, and redundant descriptions thereof will be omitted or simplified.

### (First Embodiment)

### [Overview of Power Storage Device]

First, a power storage device according to the present embodiment will be described.

The power storage device may be an all-solid-state battery or a capacitor.

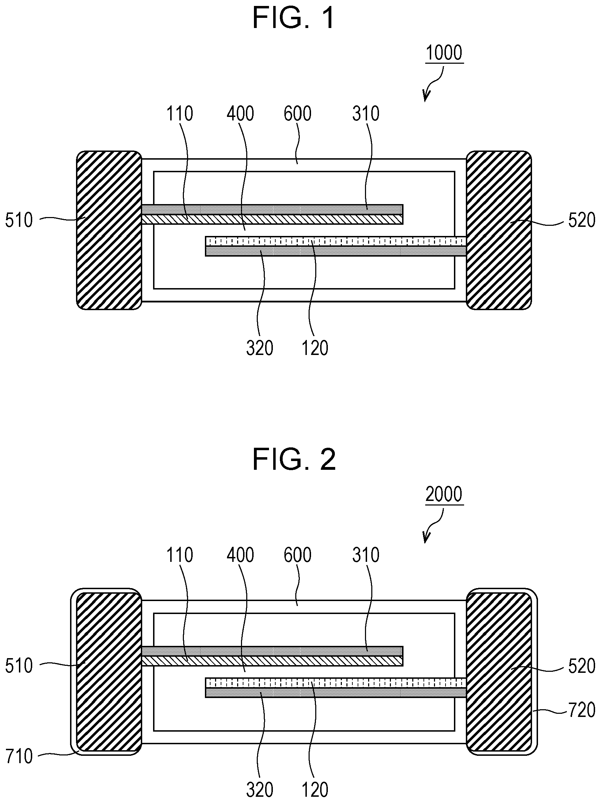

Fig. 1 is a cross-sectional view of a power storage device 1000, according to a first embodiment. In the present embodiment, the power storage device 1000 is an all-solid-state battery. In the present specification, the power storage device 1000 may be referred to as a "battery 1000". Furthermore, in the present specification, a first external electrode and a second external electrode may be collectively referred to as "terminal electrodes". Furthermore, in the present specification, a first internal electrode may be referred to as a "first current collector", and a second internal electrode may be referred to as a "second current collector".

As illustrated in Fig. 1, the power storage device 1000 includes a solid electrolyte layer 400, a coating layer 600, a first internal electrode 310, a first external electrode 510, a second internal electrode 320, and a second external electrode 520. The first internal electrode 310 is disposed inside the solid electrolyte layer 400. The first external electrode 510 is disposed outside of the solid electrolyte layer 400 and electrically connected to the first internal electrode 310. The second internal electrode 320 is disposed inside the solid electrolyte layer 400. The second external electrode 520 is disposed outside of the solid electrolyte layer 400 and electrically connected to the second internal electrode 320. The coating layer 600 coats a surface of the solid electrolyte layer 400. The coating layer 600 has a conductivity less than a conductivity of the solid electrolyte layer 400. The conductivity of the coating layer 600 may be one or more orders of magnitude less than the conductivity of the solid electrolyte layer 400 and, for example, may be less than or equal to 10⁻⁴ S/cm. The coating layer 600 may be, for example, an insulating layer.

The power storage device 1000 may include an active material layer disposed inside the solid electrolyte layer 400. The power storage device 1000 may include an active material layer, which may be a first active material layer 110. The first active material layer 110 may be disposed inside the solid electrolyte layer 400 and on the first internal electrode 310 and may be electrically connected to the first external electrode 510. Furthermore, the power storage device 1000 may include an active material layer, which may be a second active material layer 120. The second active material layer 120 may be disposed inside the solid electrolyte layer 400 and on the second internal electrode 320 and may be electrically connected to the second external electrode 520. The first active material layer 110 may be disposed to face the second active material layer 120 with the solid electrolyte layer 400 disposed therebetween.

With this configuration, a plating process can be selectively performed on the terminal electrodes, without causing the plating to be unnecessarily deposited on regions other than the terminal electrodes. Accordingly, a basic configuration of a surface-mount power storage device is realized.

The solid electrolyte layer 400 is, for example, a sintered body. Examples of a material of the solid electrolyte layer 400 include materials having a crystal structure of a garnet structure, materials having a crystal structure that has a NASICON-type structure, and materials having a perovskite-type crystal structure. For example, the solid electrolyte layer 400 is a material having a crystal structure of a garnet structure. For example, the solid electrolyte layer 400 is a sulfur-free material. For example, the solid electrolyte layer 400 may include a crystalline phase including Li₇La₃Zr₂O₁₂ or Li₇Pr₃Zr₂O₁₂.

With any of the configurations described above, an insulating property of the surface of the solid electrolyte layer is ensured. Accordingly, plating handling can be performed on the terminal electrodes without causing the plating to be unnecessarily deposited on regions other than the terminal electrodes. Hence, a surface-mount power storage device is realized.

The coating layer 600 may include an oxide, for example. The oxide may include a pyrochlore oxide, for example. The pyrochlore oxide may include La₂Zr₂O₇ or Pr₂Zr₂O₇, for example. The coating layer 600 may include a crystalline phase including Li₂ZrO₃, for example. The coating layer 600 may have a Li content molar ratio less than a Li content molar ratio of the solid electrolyte layer 400.

The coating layer 600 has a thickness of greater than or equal to 1 µm and less than or equal to 100 µm. If the thickness of the coating layer 600 is less than 1 µm, the coating layer dissolves into a plating liquid during the formation of the plating layer on the terminal electrode, and as a result, the insulating property of the surface of the solid electrolyte layer is not ensured. Furthermore, moisture can easily penetrate the surface of the solid electrolyte layer, that is, moisture resistance is degraded. If the thickness of the coating layer 600 is greater than 100 µm, cracking or peeling of the coating layer occurs due to a cooling-heating cycle or handling, and as a result, the insulating property of the surface of the solid electrolyte layer is not ensured. The thickness of the coating layer 600 may be greater than or equal to 5 µm and less than or equal to 100 µm, for example. When the thickness of the coating layer 600 is greater than or equal to 5 µm, a sintered device can be tumble-polished while the coating layer is retained thereon. Accordingly, smoothing of a surface of the sintered device and chamfering of the four corners and edges can be accomplished, and, consequently, improvement in flexural strength and inhibition of chipping in the sintered device are realized.

Furthermore, the constituent elements of the coating layer 600 may be similar to those of the solid electrolyte layer 400. Furthermore, the solid electrolyte layer 400 and coating layer 600 may both be an oxide. Specifically, the solid electrolyte layer 400 may include a crystalline phase including Li₇La₃Zr₂O₁₂ or Li₇Pr₃Zr₂O₁₂, and the coating layer 600 may include an oxide of the solid electrolyte layer 400. In this instance, the oxide of the solid electrolyte layer 400 may include at least one of a pyrochlore oxide (e.g., La₂Zr₂O₇ or Pr₂Zr₂O₇) or Li₂ZrO₃. In such instances, joining interfaces of the solid electrolyte layer 400 and the coating layer 600 have similar coefficients of thermal expansion and therefore have a high degree of matching; hence, high thermal shock resistance is achieved compared insidestances in which a solid electrolyte is coated with a resin or a glass. Consequently, in solder mounting, the occurrence of cracking at the interfaces is inhibited, and excellent thermal resistance is exhibited. Accordingly, suitability for surface mounting is achieved. The "thermal resistance" refers to durability against the heat treatment in the so-called solder reflow. Furthermore, in actual usage, excellent thermal stress, such as a cooling-heating cycle, is exhibited. As a result of these advantageous effects, suitability for surface mounting and high reliability are realized.

In instances where the solid electrolyte layer 400 includes a crystalline phase including Li₇La₃Zr₂O₁₂ or Li₇Pr₃Zr₂O₁₂, sintering or heat treatment of an unsintered, green device of the solid electrolyte layer 400 results in the formation of a coating layer 600 including a pyrochlore oxide. Consequently, the solid electrolyte layer 400 and the coating layer 600 are formed with a mutually diffused continuous joining interface without a gap. Accordingly, high joining strength is achieved because of the strong bond due to a sintered structure, compared with sintered devices having a resin coating on the surface. As a result of this advantageous effect, high environmental resistance is achieved without causing problems, such as a problem with a plating liquid or moisture penetrating the joining interface.

With any of the configurations described above, a plating process can be performed on the terminal electrodes without causing the plating to be unnecessarily deposited on regions other than the terminal electrodes. Consequently, a power storage device, as illustrated in Fig. 2, that is suitable for surface mounting and has excellent environmental resistance, such as resistance to impact and thermal shock, is realized.

Note that the coating layer 600 may include a crystalline phase including Li₂ZrO₃, which has a conductivity less than a conductivity of a crystalline phase having a garnet structure. In this case, the formed coating layer 600 has high adhesion to the solid electrolyte layer 400, that is, the obtained coating layer 600 has excellent environmental resistance, such as resistance to impact and thermal shock. Furthermore, the Li content molar ratio in the coating layer 600 may be less than the Li content molar ratio in the solid electrolyte layer 400. When the Li content molar ratio in the coating layer 600 is less than the Li content molar ratio in the solid electrolyte layer 400, the coating layer 600 has reduced conductivity because of the reduction in carriers. As a result, the coating layer 600 has the same effects as the effects described above.

With any of the configurations described above, a plating process can be performed on the terminal electrodes without causing the plating to be unnecessarily deposited on regions other than the terminal electrodes. Hence, a surface-mount power storage device is realized.

In the present embodiment, the "sintered device" is defined, for example, as a device formed of a combination of the sintered body of the solid electrolyte layer 400, the first internal electrode 310 and the second internal electrode 320, which are included as current collectors inside the sintered body, and the coating layer 600.

For example, the sintered device is formed of a solid solution composition and the coating layer 600, which coats a surface thereof, and the solid solution composition has a garnet structure including Li₇La₃Zr₂O₁₂ or Li₇Pr₃Zr₂O₁₂.

The solid electrolyte layer 400 of the first embodiment is an oxide-based solid electrolyte and, therefore, unlike a sulfur-based solid electrolyte, may not contain sulfur. Accordingly, the sintered device formed from a solid electrolyte material of the first embodiment does not generate hydrogen sulfide when exposed to air or moisture and, therefore, provides high stability. Hence, the sintered device can be employed in a power storage device that can be produced and used in air. Furthermore, the sintered device can be used even after being impregnated with a plating liquid. It is sufficient that the crystalline phase present in the solid electrolyte layer 400 of the first embodiment have a garnet-type crystal structure. The crystalline phase may have a cubic system, which is dense and has high conductivity. Furthermore, the crystalline phase may have a tetragonal system.

Furthermore, in the solid electrolyte layer 400 of the first embodiment, the solid electrolyte layer having a garnet structure may contain an element different from La or Pr, so that some objects can be achieved. One of the objects is to improve density of the solid electrolyte layer 400. Another of the objects is to realize integrated sintering of a stacked structure that may include the first current collector and the second current collector, for instance. Another of the objects is to adjust a shrinkage property with respect to a sintering temperature. Examples of the different element include elements such as Al, Nb, Ta, and Bi and rare earth metals such as La, Nd, and Sm.

Furthermore, the solid electrolyte layer 400 may include a crystalline phase having a crystal structure different from a garnet-type crystal structure, provided that conductivity and air stability are not compromised. For example, the solid electrolyte layer 400 may include a pyrochlore phase (e.g., Pr₂Zr₂O₇), which has high air stability, and/or the like. Note that the crystal structures present therein can be identified from an X-ray diffraction pattern of a cross section of a sample. Since a volume fraction of the coating layer 600 is small in the entirety of the sintered device, a diffraction pattern of the entirety of a cross section is sufficient for determining the crystalline phase. In a case where a more precise determination is desired, using an XRD pattern of a local region or a diffraction pattern of a sample from which the coating layer 600 has been removed is effective.

Furthermore, a conductive additive may be included in the solid electrolyte layer 400 to increase electron conductivity. Examples of the conductive additive include graphites, such as natural graphite and artificial graphite; carbon blacks, such as acetylene black and Ketjen black; conductive fibers, such as carbon fibers and metal fibers; carbon fluoride; metal powders, such as aluminum powders; conductive whiskers, such as zinc oxide whiskers and potassium titanate whiskers; conductive metal oxides, such as titanium oxide; and conductive polymer compounds, such as polyaniline, polypyrrole, and polythiophene.

The coating layer 600 coats the surface of the sintered body of the solid electrolyte layer 400, which is primarily formed of a garnet structure, except that the coating layer 600 does not coat end portions (end surfaces connected to the terminal electrodes) of the first internal electrode 310 and the second internal electrode 320, which are current collectors. The coating layer 600 is, for example, an oxide having a pyrochlore structure, which has a conductivity less than the conductivity of the solid electrolyte layer 400. Specifically, the coating layer 600 may include La₂Zr₂O₇ or Pr₂Zr₂O₇.

The pyrochlore oxide, which forms the coating layer 600, has low conductivity. The present inventors discovered that Li₂ZrO₃, which, when the solid electrolyte layer 400 primarily formed of a garnet structure is over-sintered, is deposited on a surface portion thereof, has also high air stability and low conductivity. Accordingly, in instances where the coating layer 600 includes a pyrochlore oxide and Li₂ZrO₃, the coating layer 600 produces enhanced advantageous effects. For example, the coating layer 600 has an advantageous effect of not causing a plating to be unnecessarily deposited on regions other than the terminal electrodes.

The sintered device is dense (a density > 4.0 g/cm³) and stable to air and moisture and, therefore, exhibits high durability even when a plating liquid is impregnated and when devices collide with each other in the manufacturing process.

The coating layer 600 may contain an element different from La or Pr. Examples of the different element include elements such as Al, Nb, Ta, and Bi and rare earth metals such as La, Nd, and Sm; these elements can be easily incorporated into the garnet structure or the pyrochlore structure.

Furthermore, the molar ratio of the Li element content in the coating layer 600 may be less than the Li content molar ratio in the solid electrolyte layer. That is, in a case where the conductive carriers (Li ions) distributed in a surface layer are vaporized by using a sintering process condition or a heat treatment, and the conductive carriers are thus reduced compared with an inner portion, even a garnet structure can form the coating layer 600.

Note that in the related art, it is common to inhibit the vaporization of Li during the sintering of a solid electrolyte layer 400. In contrast, the coating layer 600 of the present disclosure is obtained, for example, by selectively vaporizing Li during the over-sintering of the solid electrolyte layer 400, thereby forming an oxide in a surface layer region of the solid electrolyte layer 400.

As with the solid electrolyte layer 400, the crystal structures in the coating layer 600 can also be identified from an XRD pattern of a sample, which is a sample of a local region or a sample processed to include only a high-resistance layer. Note that the pyrochlore oxide is formed in the surface layer by selectively vaporizing Li from the surface layer in the process of sintering the solid solution composition having a garnet structure. For example, a pyrochlore oxide can be formed exclusively in the surface layer region by heat-treating the sintered body of a solid electrolyte having a garnet structure at a temperature of 700°C to 1300°C for 10 minutes to 60 minutes in air. In this manner, a power storage device in which the coating layer 600, which has a thickness of greater than or equal to 1 µm and less than or equal to 100 µm and is stable, is integrated with the solid electrolyte layer 400, is realized. With such a method, the coating layer 600 can be formed to have a large thickness and extend over a wide area. Note that the thickness of the coating layer 600 can be controlled by the temperature or by a process time, that is, the coating layer 600 can be formed to have a large thickness by using a high temperature or extending the process time. Furthermore, in the process of forming the coating layer, a highly permeable, heat-resistant container may be used. For example, a heat-resistant container having a surface with irregularities may be used. In this case, the coating layer 600 can be formed to have a more uniform thickness. The heat-resistant container may be an alumina container having a porosity of greater than or equal to 30% and less than or equal to 60%, so as to provide higher permeability. Furthermore, the surface with irregularities may be an embossed surface with projections of approximately 50 µm.

Note that for ceramic chip components, typically, a chamfering process is performed on a sintered device to prevent chipping or improve mechanical strength. The chamfering process may be performed by tumble-polishing or the like provided that the coating layer 600 can be retained, and subsequently, the terminal electrodes may be formed and subjected to a plating process. Accordingly, the thickness of the coating layer 600 may be, for example, greater than or equal to 5 µm. Note that, to completely prevent the penetration of a plating liquid into the sintered device, a liquid repellent agent, such as a silane coupling agent, may be applied prior to plating.

With any of the configurations described above, a state is realized in which the surface of the solid electrolyte sintered device is coated with the coating layer 600, which has high impact resistance and environmental resistance. The thickness of the coating layer 600 can be evaluated by observing a cross section thereof with an optical microscope or an SEM. For example, an average of thicknesses at randomly selected five points of the cross section may be employed as the thickness of the coating layer 600. Furthermore, the conductivity of the coating layer 600 and the interior of the sintered body can be measured by surface resistance measurement (a 4-point probe measurement method, for example, with a Loresta-GX, manufactured by Mitsubishi Chemical Analytech Co.). Alternatively, the evaluation can be made by using a nano-probing system (Hitachi, Ltd.), which can be used for failure analysis of a semiconductor device, such as an LSI.

The first internal electrode 310 and the second internal electrode 320 are internal layer current collectors of the sintered device, and a metal having high conductivity may be used in these electrodes. For example, a metal such as Pd, Pt, Ag, Cu, or Ni, an alloy such as Ag-Pd or Ag-Pt, or the like may be used. A metal that enables the first internal electrode 310 and the second internal electrode 320 to have a melting point greater than or equal to a sintering temperature of the solid electrolyte layer 400 may be used so that the electrodes and the solid electrolyte layer 400 can be simultaneously sintered. Note that in instances where a non-noble metal, such as Cu or Ni, is used, the sintering is to be performed at a controlled oxygen partial pressure at which the electrodes do not oxidize; in this manner, the metal can be used as an internal electrode that serves as a current collector. Furthermore, a sintering shrinkage factor may be controlled. This is to address a problem in which, in the sintering process, a difference in a shrinkage property causes the electrode metal to peel off from the interface formed with a portion surrounding the electrode metal. In addition, an additive that can be diffused into the surrounding portion for binding may be included to an extent that does not impair conductivity. Additives that may be included in such an electrode material include binding solid electrolytes and positive and negative electrode active materials. Any of a variety of metals, oxides, and the like may be used. These additives may have a particle diameter of less than or equal to a thickness of the electrodes.

The terminal electrodes are formed of a metal that exhibits high conductivity. Specific examples thereof include Ag, Cu, Ni, Pt, Pd, Ag-Pd, and Ag-Pt. Typically, the terminal electrodes are formed by applying a metal powder paste to end surfaces of the sintered body and heat-treating the metal powder paste. Accordingly, an electrical connection with the internal electrodes, which serve as current collectors, is ensured.

To increase the joining strength achieved with the sintered body, a glass frit may be included and diffused into the sintered device, and, consequently, terminal electrodes having high bonding strength can be formed. Furthermore, an effect of clogging pores in the heat-treated electrode structures with a glass component is produced and, accordingly, a sealing effect is also produced for preventing moisture of, for example, a plating liquid from penetrating into the interior of the sintered device and thus degrading properties. When such a glass component included in the terminal electrodes is heat-treated at a temperature greater than or equal to the melting point thereof, the glass component wets and spreads on the irregularities and in open pores of the surface of the coating layer 600 under capillary action and clogs penetration paths or pores of the coating layer 600. Accordingly, a sealing effect for the entirety of the sintered device can also be produced. If the glass component is directly diffused into the solid electrolyte layer, the glass component travels along the grain boundaries, at which a diffusion rate is high, and, therefore, rapidly diffuses inside the sintered body and blocks a conduction path; as a result, conductivity may be degraded. Accordingly, the coating layer 600 may be used as a diffusion layer for a glass frit, that is, as a protective layer for the solid electrolyte layer 400. In this case, degradation of conductivity in a functional portion is inhibited. With these advantageous effects, a high-performance power storage device can be obtained which has high reliability as exhibited in, for instance, flexural stress, drop impact, and/or environmental resistance tests after the device is mounted to a substrate. The "functional portion" is, for example, a region between a positive electrode and a negative electrode. Examples of the environmental resistance test include a test for examining durability against moisture.

In the power storage device 1000, the first active material layer 110 may be used as a positive electrode, for example. The first active material layer 110 that is used as a positive electrode includes a material having a property of occluding and releasing metal ions. Examples of the metal ions include lithium ions. The positive electrode includes a positive electrode active material, for example. The positive electrode may include a solid electrolyte layer 400. This is effective for forming a conduction path, and in addition, correcting structural defects and/or controlling a sintering shrinkage factor in an instance in which the positive electrode active material and the solid electrolyte layer 400 are simultaneously sintered. Resulting effects that can be provided are a high energy density and a high discharge capacity.

In the power storage device 1000, the second active material layer 120 may be used as a negative electrode, for example. The second active material layer 120 that is used as a negative electrode includes a material having a property of occluding and releasing metal ions. Examples of the metal ions include lithium ions. For example, the negative electrode includes a negative electrode active material and may include a solid electrolyte; this is effective for correcting structural defects and/or controlling a sintering shrinkage factor in an instance in which the negative electrode active material and the solid electrolyte are simultaneously sintered. Accordingly, a similar effect to that of the positive electrode is produced.

Note that a conductive additive may be included in at least one selected from the positive electrode and the negative electrode to increase electron conductivity.

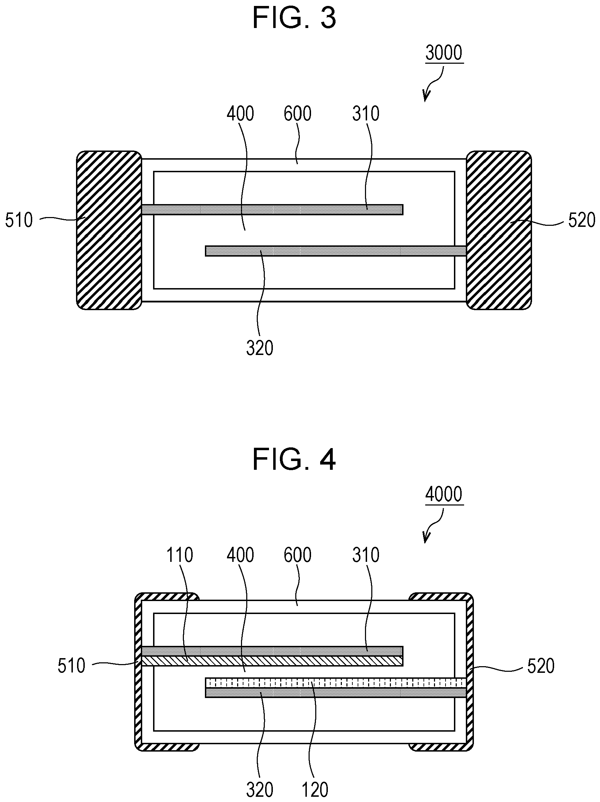

Note that in instances where neither the first active material layer 100 nor the second active material layer 200 is formed on the current collector, the resulting device may be a device that can serve as a solid-state capacitor. An embodiment of the solid-state capacitor is illustrated in Fig. 3.

With any of the configurations described above, a surface-mount power storage device with high reliability is realized. An example of a plated device is a battery 2000 illustrated in Fig. 2. For example, the terminal electrodes have a Ni (underlying layer) and Sn (surface layer) plating applied thereto. The plating layers each have a thickness of greater than or equal to 1 µm and less than or equal to 5 µm. A total thickness of the Ni layer and the Sn layer may be, for example, greater than or equal to 1 µm and less than or equal to 10 µm.

### <Method for Manufacturing Solid Electrolyte Material and Power Storage Device>

The solid electrolyte material having a garnet structure of the first embodiment can be manufactured by using the following method, for example.

First, a Li₂CO₃ powder, a Pr₆O₁₁ powder, and a ZrO₂ powder, which are starting raw materials, are prepared. Subsequently, each of the raw material powders is weighed out such that the solid electrolyte layer has a desired composition, which is, for example, a composition of Li₇Pr₃Zr₂O₁₂. Note that a Pr-containing pyrochlore oxide (e.g., Pr₂Zr₂O₇), which is an intermediate phase and is formed as a result of calcination, may be synthesized in advance, and this precursor may be used as a starting raw material. In this case, too, a garnet structure can be obtained in sintering. Furthermore, the compositional ratio between the three components may not necessarily be based on a stoichiometric composition. It is sufficient that the composition enables the formation of a solid solution having a cubic system garnet structure and dense sintering (e.g., a density of 4.0 g/cm³ or greater).

In the garnet structure, a composition in which the positions of Pr and Zr are partially replaced with a different element (e.g., a rare earth metal, such as La, Nd, or Sm, or Al, Nb, Ta, Bi, or the like) may be used, or an additive may be included, to produce a similar effect, provided that the different element or the additive enables the formation of a dense sintered body (e.g., a density of 4.0 g/cm³ or greater) that is a solid solution having a cubic system garnet structure.

Next, the starting raw material powders are loaded into a polyethylene ball mill, and stabilized zirconia balls (ϕ 5 mm) and pure water are added. The powders are mixed and milled (to an average particle diameter of 0.7 ± 0.5 µm) for approximately 20 hours and subsequently dehydrated and dried. The dried powder is loaded into a high-purity alumina crucible, the crucible is coated with a lid, and the dried powder is calcined at approximately 750°C in air for 2 hours to 5 hours. Next, the calcined powder is loaded into a polyethylene ball mill in a similar manner as that for the mixing, and stabilized zirconia balls (ϕ 5 mm) and pure water are added. The powder is milled for approximately 10 to 30 hours to an average particle diameter of 1.0 ± 0.5 µm and, subsequently, sufficiently dehydrated and dried. The dried calcined powder is sintered, and, accordingly, the solid electrolyte layer 400 having a garnet structure is synthesized. The power storage device can be produced with the calcined milled powder by using a common layer stacking process.

Now, a method for manufacturing the power storage device of the present embodiment will be described in detail.

First, each of the calcined powders used as raw materials for the solid electrolyte layer 400 is weighed out as described above. An organic binder, such as a butyral resin, a solvent primarily including butyl acetate, and a plasticizing agent, such as BBP are added, and mixing and dispersing is performed. The resulting slurry is passed through a mesh to remove aggregated powder and binder lumps, and subsequently, the resultant is shaped on a PET film of 50 µm by using a doctor blade method. In this manner, a green sheet is prepared. Next, positive and negative electrode active material layers are formed from first and second active material paces on the green sheet by using a screen printing method. Furthermore, print components that constitute current collectors 300 are similarly formed by printing, from an internal electrode paste, on the active material layers. Subsequently, green sheets on which print components have been formed are stacked such that a desired configuration is achieved, and pressure is applied to the stacked green sheets. Accordingly, a stacked structure is obtained. The stacked structure is diced into separate pieces having desired dimensions, which form individual green chip devices. The green chip devices are placed in a heat-resistant alumina sagger. To prevent the green body from coming in direct contact with the bottom of the sagger, zirconia powder (average particle size of 50 µm) is uniformly spread on the bottom, and a calcined powder having the same composition as that of the green body, which is to be sintered, is spread on the zirconia powder. Thereafter, the green body is placed thereon and embedded in the calcined powder having the same composition. Heating is performed at approximately 400°C to 500°C for 2 hours to 5 hours under a nitrogen flow. In this manner, debindering is carried out. Thereafter, a sagger cover polished with 800-grit sandpaper to have a smooth surface is placed to hermetically seal the sagger, and sintering is performed at a temperature of 1050°C to 1130°C for 2 hours to 10 hours. Thereafter, the sagger cover is removed, and a heat treatment is performed at the same temperature as the sintering temperature for 5 minutes to 30 minutes. This treatment enables Li to be selectively vaporized, and, accordingly, the coating layer 600 can be formed in a surface layer region of the solid electrolyte layer 400. Subsequently, chamfering is performed by tumble polishing, and thereafter, a paste that forms the external electrodes is applied to both end surfaces of the resulting sintered body. The paste includes conductor particles that include at least one glass frit in an amount of 0.5 wt% to 10 wt%, and the glass frit has a softening point less than or equal to the heat treatment temperature. After the paste is dried, a heat treatment is performed at a temperature of 500°C to 850°C in air. Accordingly, a sintered device that forms a power storage device of the present invention is obtained. Note that the heat treatment may be performed in an air atmosphere in instances in which the internal electrodes are formed of a metal that does not oxidize in air, and examples of the metal include AgPd (silver-palladium) systems. In instances where the metal is a non-noble metal that oxidizes in air, such as Ni or Cu, the heat treatment is to be performed in nitrogen or the like, at an oxygen concentration at which the internal electrodes do not oxidize. Subsequently, a plating is applied to the terminal electrodes by barrel plating or the like. Application of a plating is a common practice for terminal electrodes of chip components. In this manner, a power storage device 2000, illustrated in Fig. 2, can be obtained.

Note that the first active material and the second active material may each be an active material capable of charging and discharging, and a solid electrolyte may be included as a component of a mixture. The solid electrolyte used in the mixture is not limited to a solid electrolyte having a garnet structure. Any solid electrolyte that does not cause structural defects or unnecessary reactions in the simultaneous sintering may be used. Furthermore, in an instance where the power storage device is employed as a solid-state ion capacitor, the power storage device can be produced by using the same configuration as that of a common multilayer capacitor and simultaneously sintering internal electrodes that serve as current collectors; in this instance, an active material layer as described above is not formed.

### (Second Embodiment)

Fig. 2 is a schematic diagram illustrating a configuration of a power storage device according to a second embodiment. Fig. 2 is a cross-sectional view of a power storage device 2000, according to the present embodiment. Elements of the power storage device 2000 of the present embodiment that are common with those of the power storage device 1000 of the first embodiment are designated with the same reference numerals, and descriptions thereof may be omitted. That is, regarding the embodiments provided below, the description of one embodiment may apply to another embodiment as long as there is no technical inconsistency. Furthermore, any combination of the embodiments is possible as long as there is no technical inconsistency.

The power storage device 2000 additionally includes a plating that coats a surface of a first external electrode 510 and a second external electrode 520. As illustrated in Fig. 2, the power storage device 2000 includes a first plating layer 710 on the first external electrode 510 and includes a second plating layer 720 on the second external electrode 520. The plating layers may include two or more layers that include an underlying layer. Examples of a metal that forms the underlying layer of the plating layers include Cu, Ni, Ag, Pd, Sn, Au, and alloys of any of the foregoing metals. These may be used alone or in a combination of two or more. Examples of the underlying layer of the plating layers may include Ni and Ni alloys. In instances where the plating layers include two or more layers, examples of a surface layer of the plating layers include Cu, Ni, Ag, Au, Sn, Zn, and alloys of any of the foregoing metals. These may be used alone or in a combination of two or more. Examples of the surface layer of the plating layers may include Sn and Sn alloys. The plating layers may include, for example, Ni (underlying layer) and Sn (surface layer). A method for the plating is not particularly limited and may be a known method.

With any of the configurations described above, a surface-mount power storage device having terminal electrodes that have undergone a plating process is realized. The plating process is achieved without causing the plating to be unnecessarily deposited on regions other than the terminal electrodes.

### (Third Embodiment)

Fig. 3 is a schematic diagram illustrating a configuration of a power storage device according to a third embodiment. Fig. 3 is a cross-sectional view of a power storage device 3000, according to the present embodiment. Elements of the power storage device 3000 of the present embodiment that are common with those of the power storage device 1000 of the first embodiment are designated with the same reference numerals, and descriptions thereof may be omitted. That is, regarding the embodiments provided below, the description of one embodiment may apply to another embodiment as long as there is no technical inconsistency. Furthermore, any combination of the embodiments is possible as long as there is no technical inconsistency.

The power storage device 3000 of the present embodiment can be employed as a capacitor. The power storage device 3000 does not include active material layers, such as the first active material layer 110 or the second active material layer 120.

With the configuration described above, plating handling can be performed on the terminal electrodes without causing the plating to be unnecessarily deposited on regions other than the terminal electrodes. Hence, a surface-mount power storage device is realized.

### (Fourth Embodiment)

Fig. 4 is a schematic diagram illustrating a configuration of a power storage device according to a fourth embodiment. Fig. 4 is a cross-sectional view of a power storage device 4000, according to the present embodiment. Elements of the power storage device 4000 of the present embodiment that are common with those of the power storage device 1000 of the first embodiment are designated with the same reference numerals, and descriptions thereof may be omitted. That is, regarding the embodiments provided below, the description of one embodiment may apply to another embodiment as long as there is no technical inconsistency. Furthermore, any combination of the embodiments is possible as long as there is no technical inconsistency.

The power storage device 400 has a shape such that the first external electrode 510 and the second external electrode 520 cover a part of a peripheral part of the solid electrolyte layer 400. In the power storage device 4000, a shape of the first external electrode 510 is not particularly limited provided that the first external electrode 510 is electrically connected to the first active material layer 110 and the first internal electrode 310. Furthermore, in the power storage device 4000, a shape of the second external electrode 520 is not particularly limited provided that the second external electrode 520 is electrically connected to the second active material layer 120 and the second internal electrode 320.

With the configuration described above, plating handling can be performed on the terminal electrodes without causing the plating to be unnecessarily deposited on regions other than the terminal electrodes. Hence, a surface-mount power storage device is realized.

### (Fifth Embodiment)

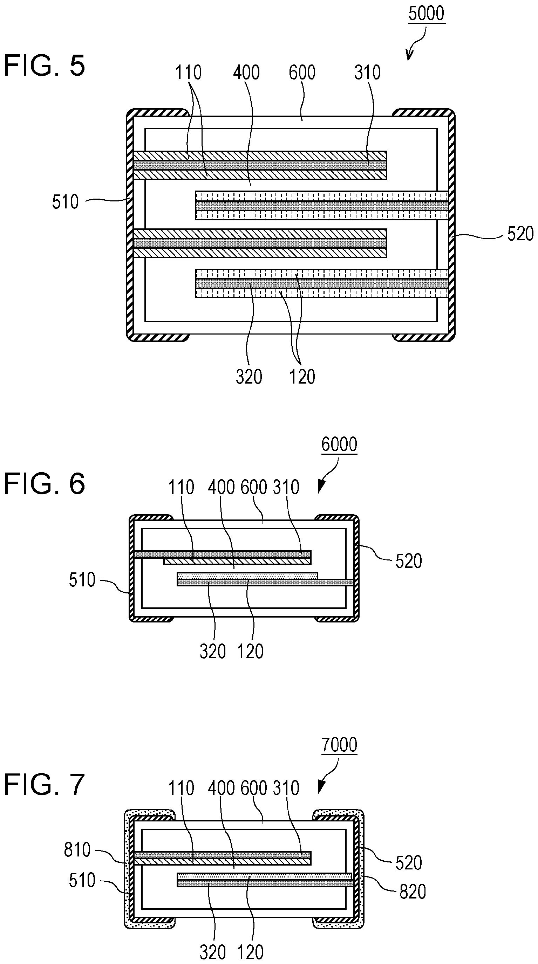

Fig. 5 is a schematic diagram illustrating a configuration of a power storage device according to a fifth embodiment. Fig. 5 is a cross-sectional view of a power storage device 5000, according to the present embodiment. Elements of the power storage device 5000 of the present embodiment that are common with those of the power storage device 1000 of the first embodiment are designated with the same reference numerals, and descriptions thereof may be omitted. That is, regarding the embodiments provided below, the description of one embodiment may apply to another embodiment as long as there is no technical inconsistency. Furthermore, any combination of the embodiments is possible as long as there is no technical inconsistency.

The power storage device 5000 includes a plurality of cells. The power storage device 5000 includes a plurality of cells that are electrically connected to one another in parallel. Each of the plurality of cells includes a first active material layer 110; a second active material layer 120; a first internal electrode 310, which is electrically connected to the first active material layer 110; a second internal electrode 320, which is electrically connected to the second active material layer 120; and a solid electrolyte layer 400. Each of the plurality of cells has two sets of a pair of end surfaces that face each other. The power storage device 5000 is formed of a plurality of cells 30 that are stacked on top of one another.

With the configuration described above, plating handling can be performed on the terminal electrodes without causing the plating to be unnecessarily deposited on regions other than the terminal electrodes. Hence, a surface-mount power storage device is realized.

### (Sixth Embodiment)

Fig. 6 is a schematic diagram illustrating a configuration of a power storage device according to a sixth embodiment. Fig. 6 is a cross-sectional view of a power storage device 6000, according to the present embodiment. Elements of the power storage device 6000 of the present embodiment that are common with those of the power storage device 1000 of the first embodiment are designated with the same reference numerals, and descriptions thereof may be omitted. That is, regarding the embodiments provided below, the description of one embodiment may apply to another embodiment as long as there is no technical inconsistency. Furthermore, any combination of the embodiments is possible as long as there is no technical inconsistency.

In the power storage device 6000, the first active material layer 110 is not in contact with the first external electrode 510. That is, in the power storage device 6000, the first active material layer 110 is disposed inside the solid electrolyte layer 400 and on the first internal electrode 310 while being physically separated from the first external electrode 510. Furthermore, in the power storage device 6000, the second active material layer 120 is not in contact with the second external electrode 520. That is, in the power storage device 6000, the second active material layer 120 is disposed inside the solid electrolyte layer 400 and on the second internal electrode 320 while being physically separated from the second external electrode 520. Note that in the power storage device 6000, a shape of the first external electrode 510 is not particularly limited provided that the first external electrode 510 is electrically connected to the first internal electrode 310. Furthermore, in the power storage device 6000, a shape of the second external electrode 520 is not particularly limited provided that the second external electrode 520 is electrically connected to the second internal electrode 320.

With the configuration described above, it is possible to inhibit the active material layers from reacting during the formation of the external electrodes, and, therefore, a surface-mount power storage device having enhanced characteristics is realized. Furthermore, during the formation of the plating or in an environment with high humidity, moisture penetration from the outside through the active material layer can be inhibited, and, therefore, a surface-mount power storage device having high environmental resistance is realized.

### (Seventh Embodiment)

Fig. 7 is a schematic diagram illustrating a configuration of a power storage device according to a seventh embodiment. Fig. 7 is a cross-sectional view of a power storage device 7000, according to the present embodiment. Elements of the power storage device 7000 of the present embodiment that are common with those of the power storage device 1000 of the first embodiment are designated with the same reference numerals, and descriptions thereof may be omitted. That is, regarding the embodiments provided below, the description of one embodiment may apply to another embodiment as long as there is no technical inconsistency. Furthermore, any combination of the embodiments is possible as long as there is no technical inconsistency.

The power storage device 7000 additionally includes resin electrodes that coat a surface of the first external electrode 510 and a surface of the second external electrode 520. As illustrated in Fig. 7, the power storage device 7000 additionally includes a first resin electrode 810 on a surface of the first external electrode 510 and additionally includes a second resin electrode 820 on a surface of the second external electrode 520. For example, the first resin electrode 810 and the second resin electrode 820 may have a Young's modulus less than a Young's modulus of the first external electrode 510 and a Young's modulus of the second external electrode 520. For example, the first resin electrode 810 and the second resin electrode 820 may be a conductive resin. A material that is included in the conductive resin is not particularly limited and may be a known material. A method for forming the first resin electrode 810 and the second resin electrode 820 is not particularly limited and may be a known method. Although not illustrated in Fig. 7, the power storage device 7000 may include a plating layer on surfaces of the first external electrode 510 and the second external electrode 520 or on surfaces of the first resin electrode 810 and the second resin electrode 820.

With any of the configurations described above, a surface-mount power storage device having high impact resistance is realized.

### Industrial Applicability

Batteries of the present disclosure, which use a solid electrolyte, are useful as a power storage device that is used in various electronic or electrical devices. Reference Signs List

- 110: First active material layer
- 120: Second active material layer
- 310: First internal electrode (first current collector)
- 320: Second internal electrode (second current collector)
- 400: Solid electrolyte layer
- 510: First external electrode
- 520: Second external electrode
- 600: Coating layer
- 710: First plating layer
- 720: Second plating layer
- 810: First resin electrode
- 820: Second resin electrode
- 1000, 2000, 3000, 4000, 5000, 6000, 7000: Power storage device

## Claims

1. A power storage device comprising:
a solid electrolyte layer;
a coating layer that coats a surface of the solid electrolyte layer;
a first internal electrode disposed inside the solid electrolyte layer;
a first external electrode disposed outside of the solid electrolyte layer and electrically connected to the first internal electrode;
a second internal electrode disposed inside the solid electrolyte layer; and
a second external electrode disposed outside of the solid electrolyte layer and electrically connected to the second internal electrode; wherein
the coating layer has a conductivity less than a conductivity of the solid electrolyte layer, and
the coating layer has a thickness of greater than or equal to 1 µm and less than or equal to 100 µm.

2. The power storage device according to Claim 1, further comprising an active material layer disposed inside the solid electrolyte layer.

3. The power storage device according to Claim 1 or 2, wherein the solid electrolyte layer is a sintered body.

4. The power storage device according to any one of Claims 1 to 3, wherein the solid electrolyte layer has a garnet structure.

5. The power storage device according to any one of Claims 1 to 4, wherein the solid electrolyte layer contains no sulfur.

6. The power storage device according to any one of Claims 1 to 5, wherein the solid electrolyte layer includes a crystalline phase including at least one selected from the group consisting of Li₇La₃Zr₂O₁₂ and Li₇Pr₃Zr₂O₁₂.

7. The power storage device according to any one of Claims 1 to 6, wherein the coating layer has a conductivity of less than or equal to 10⁻⁴ S/cm.

8. The power storage device according to any one of Claims 1 to 7, wherein the coating layer includes an oxide.

9. The power storage device according to Claim 8, wherein the oxide includes a pyrochlore oxide.

10. The power storage device according to Claim 9, wherein the pyrochlore oxide includes at least one selected from the group consisting of La₂Zr₂O₇ and Pr₂Zr₂O₇.

11. The power storage device according to any one of Claims 1 to 10, wherein the coating layer includes a crystalline phase including Li₂ZrO₃.

12. The power storage device according to any one of Claims 1 to 11, wherein the coating layer has a Li content molar ratio less than a Li content molar ratio of the solid electrolyte layer.

13. The power storage device according to any one of Claims 1 to 12, wherein the coating layer has a thickness of greater than or equal to 5 µm and less than or equal to 100 µm.

14. The power storage device according to any one of Claims 1 to 13, further comprising a plating that coats a surface of the first external electrode and a surface of the second external electrode.

15. The power storage device according to any one of Claims 1 to 14, wherein the plating has a thickness of greater than or equal to 1 µm and less than or equal to 10 µm.
